# EUROPÄISCHE PATENTSCHRIFT

(11) **EP 1 008 507 B1**
(45) Veröffentlichungstag und Bekanntmachung des Hinweises auf die Patenterteilung: **23.06.2004**
(21) Anmeldenummer: 99124278.5
(22) Anmeldetag: 04.12.1999
(51) Int. Cl.: B62D 7/14

(54) **Lenkeinrichtung und Fahrzeug**
Steering apparatus and vehicle
Dispositif de direction et véhicule

(30) Priorität: 11.12.1998 US 210164
(43) Veröffentlichungstag der Anmeldung: 14.06.2000
(73) Patentinhaber: DEERE & COMPANY, Moline, Illinois 61265-8098 (US)
(72) Erfinder: Nordorft, Allen James, Beaver Dam, WI 53916 (US); Cinnamon, James Jury, Horicon, WI 53032 (US)
(74) Vertreter: Magin, Ludwig Bernhard

(56) Entgegenhaltungen:
- US-A- 4 553 768
- US-A- 4 881 613
- US-A- 5 020 812
- US-A- 5 048 853

## Beschreibung

Die Erfindung betrifft eine Lenkeinrichtung mit einem Lenkgestänge, das wirksam mit zumindest einem vorderen Rad und einem rückwärtigen Rad in Verbindung steht, um diese in Abhängigkeit voneinander einschlagen zu können, wobei dem rückwärtigen Rad Mittel zugeordnet sind, die es direkt oder indirekt in Richtung seiner Neutralstellung belasten, sowie ein Fahrzeug mit einer derartigen Lenkeinrichtung.

Die US-A-4,881,613 zeigt ein Fahrzeug mit einer Vierradlenkung, welche ein manuell betätigtes Lenkmittel und einen vorderen und einen rückwärtigen Lenkmechanismus aufweist, die mit dem Lenkmittel verbunden sind, um Lenkbewegungen vorderer und rückwärtiger Räder des Fahrzeugs zu erzeugen. Der rückwärtige Lenkmechanismus weist eine Servounterstützung auf, welche durch eine durch einen Fahrzeugantrieb betätigte Pumpe betätigt wird. Eine Rückstellfeder bringt die rückwärtigen Räder in eine Neutralstellung, wenn die Servounterstützung deaktiviert ist.

Die US-A-5,048,853 zeigt eine Vierrad-Lenkung für ein Fahrzeug, die eine Einrichtung zur Steuerung der vorderen und rückwärtigen Räder des Fahrzeugs und ein Verbindungselement zur Verbindung eines vorderen und eines rückwärtigen Lenkgestänges aufweist, um diese in Abhängigkeit voneinander zu bewegen, so daß zwischen der Bewegung des vorderen und des rückwärtigen Lenkgestänges eine Verzögerung auftritt. Hierzu sind das vordere und das rückwärtige Lenkgestänge über eine Scheibe mit einer schlitzförmigen Öffnung und einem in dieser Öffnung angeordneten Schlitz derart verbunden, daß eine Bewegung erst nach Erreichen eines vorgegebenen Einschlagwinkels von dem vorderen Lenkgestänge an das rückwärtige Lenkgestänge weitergegeben wird.

Die US-A-4,738,459 zeigt ein Fahrzeug mit einer Vierrad-Lenkung, das einen Fahrzeugrahmen, ein Paar vorderer und ein Paar rückwärtiger Räder und eine Lenkeinrichtung zum gleichzeitigen Lenken der vorderen und der rückwärtigen Räder aufweist, wobei vordere und rückwärtige Lenkhebel, die über entsprechende Spurstangen etc. wirksam mit den jeweiligen Rädern in Verbindung stehen, über ein durch ein Lenkrad verdrehbares, sektorielles Zahnrad und ein zugeordnetes Lenkgestänge verschwenkbar sind.

Bei beiden Lenkeinrichtungen müssen sowohl die vorderen als auch die rückwärtigen Räder nach Beendigung einer Kurvenfahrt durch eine Bedienungsperson wieder in Geradeausstellung gebracht werden.

Das der Erfindung zugrunde liegende Problem wird darin gesehen, das hierzu durch eine Bedienungsperson eine verhältnismäßig große Kraft aufgebracht werden muß und die Handhabung eines solchen Fahrzeugs wenig komfortabel ist.

Dieses Problem wird erfindungsgemäß durch die Lehre der Patentansprüche 1 bzw. 8 gelöst, wobei in den weiteren Patentansprüchen die Lösung in vorteilhafter Weise weiterentwickelnde Merkmale aufgeführt sind.

Auf diese Weise muß eine Bedienungsperson weniger Kraft aufbringen, um ein Rad oder mehrere Räder eines Fahrzeugs wieder in eine neutrale Stellung zu bringen, die sie vorzugsweise bei einer Geradeausfahrt des Fahrzeugs einnehmen. Eine solche Lenkeinrichtung kann an einem Fahrzeug mit zwei oder mehreren Rädern eingesetzt werden, beispielsweise an einem drei-, vier- oder mehrrädrigen Fahrzeug. Es ist denkbar, daß die Mittel auf eines dieser Räder oder auch auf mehrere Räder zusammen oder unabhängig voneinander einwirken. Wird das Rad in seiner Neutralstellung nicht durch die Mittel belastet, so ist die Lenkeinrichtung bzw. das Lenkgestänge in dieser Stellung keiner Belastung ausgesetzt. Darüber hinaus wird auch die Lenkung selbst nicht belastet, so daß die Geradeausfahrt für eine Bedienungsperson vereinfacht wird.

Die Mittel können Hydraulikmotoren bzw. Pneumatikmotoren umfassen, die in einem Zylinder verschieblich angeordnete Kolben aufweisen, vorzugsweise weisen sie aber zumindest eine Feder auf. Diese Feder kann durch eine Druck- oder Zugfeder gebildet werden. Auch ein federndes Element beispielsweise aus einem Elastikmaterial ist denkbar. Vorzugsweise ist sie aber als eine Dreh- bzw. Torsionsfeder ausgebildet. Auch eine Kombination mehrerer bzw. verschiedener Federn/federnder Elemente ist vorstellbar.

Das Lenkgestänge kann ein vorderes und ein rückwärtiges Lenkgestänge aufweisen, wobei diese derart in Verbindung stehen, so daß das vordere und das rückwärtige Rad derart eingeschlagen werden, daß das rückwärtige Rad dem vorderen Rad bei einer Kurvenfahrt folgen kann bzw. das vordere Rad und das rückwärtige Rad entgegengesetzt eingeschlagen werden. Auch ein gleichgerichtetes Einschlagen ist vorstellbar. Hierzu kann das Lenkgestänge ein mit einem beispielsweise auf einer Lenkspindel vorgesehenen Ritzel kämmendes Zahnrad aufweisen, das mit einem Hebel (oder mehreren Hebeln) in Verbindung steht, der in die Lenkgestänge beispielsweise über die Wahl der Angreifpunkte entgegengesetzte Schwenkbewegungen einleitet.

Vorzugsweise wird die beispielsweise durch eine Bedienungsperson über ein Lenkrad oder einen Lenkhebel eingebrachte Lenkbewegung im Bereich dieser Umlenkeinrichtung in die Lenkeinrichtung eingebracht, so daß eine geringe Anzahl von Bauteilen Verwendung findet und keine weiteren Übertragungsmittel beispielsweise in der Art von Zwischenhebeln, -gestängen oder -zahnräder notwendig sind.

Weist die Lenkeinrichtung eine Schwenkwelle auf, über die die Lenkbewegung an das rückwärtige Rad übermittelt wird, so kann durch diese eine Höhendifferenz zwischen den Rädern und der Lenkeinrichtung ausgeglichen werden, die beispielsweise auftreten kann, wenn unterhalb eines Fahrzeugs ein Freiraum beispielsweise zur Aufnahme von Anbaugeräten, wie Mähwerken, Kehreinrichtungen etc. vorgesehen ist und die Lenkeinrichtung bzw. das Lenkgestänge möglichst dicht an dem Unterboden des Fahrzeugs angeordnet wird. Ist eine solche Schwenkwelle vorgesehen, so können die Mittel durch eine Dreh- bzw. Torsionsfeder gebildet werden, die auf die Schwenkwelle aufgesetzt wird, so daß sie nicht knicken kann und ortsfest angeordnet ist. Vorzugsweise ist die Schwenkwelle unabhängig von dem Lenkgestänge beispielsweise an dem Rahmen eines Fahrzeugs gelagert, wodurch sich die Lenkeinrichtung bzw. zumindest das rückwärtige Lenkgestänge über die Schwenkwelle abstützen kann. Die Drehfeder kann beispielsweise einenends ebenfalls an dieser Lagerung angreifen.

Ist ein Lenkhebel vorgesehen, so kann dieser auf zumindest eine, vorzugsweise aber auf wenigstens zwei Spurstangen und somit Räder einwirken und diese gemeinsam verschwenken. Die Mittel können dann an diesem Hebel angreifen und gleichzeitig mehrere Räder beeinflussen. Vorzugsweise handelt es sich hierbei um einen rückwärtigen Lenkhebel, der die Schwenkstellung der rückwärtigen Räder einstellt, wodurch nur die Bestandteile des rückwärtigen Lenkgestänges einer Belastung durch die Mittel ausgesetzt sind.

Greifen die Mittel einenends an einem nicht der Lenkeinrichtung zugeordneten Bauteil, beispielsweise der Lagerung der Schwenkwelle oder an einem Fahrzeugrahmen an, so wird die durch ein Schwenken der Räder in die Mittel eingebrachte Belastungen über dieses abgestützt, wodurch die Lenkeinrichtung keine zusätzlichen Belastungen aufnehmen muß und günstig dimensioniert werden kann.

Beim Ausführen einer nur geringen Drehung oder beim Durchfahren einer weiten Kurve kann es ausreichend sein, wenn nur eine Lenkung des vorderen Rades erfolgt. Um in diesem Bereich eine so leichte Handhabung wie bei einem nur vorderradgelenkten Fahrzeug zu erhalten, können Mittel vorgesehen sein, die bewirken, daß ein Einschlagen der rückwärtigen Räder erst ab dem Überschreiten eines vorgegebenen Lenkwinkels bzw. mit einer gewissen Verzögerung erfolgt.

Das Fahrzeug kann beispielsweise ein Fahrzeug zur Rasen-Garten oder Grundstückspflege, wie ein Rasentraktor, ein Aufsitzmäher, eine Schneefräse oder eine Kehrmaschine sein. Eine solche Lenkeinrichtung ist hier besonders vorteilhaft, da solche Fahrzeuge enge Kurven ausführen müssen und auch oftmals von ungeübten Bedienungspersonen gefahren werden. Es ist aber denkbar, eine solche Lenkeinrichtung an anderen Kleinfahrzeugen und auch an Spiel- bzw. Freizeitfahrzeugen wie beispielsweise an Carts vorzusehen.

In der Zeichnung ist ein nachfolgend näher beschriebenes Ausführungsbeispiel der Erfindung dargestellt. Es zeigt:
- Fig. 1: ein Fahrzeug, an dem eine erfindungsgemäße Lenkeinrichtung eingesetzt werden kann,
- Fig. 2: eine Ansicht einer Lenkeinrichtung von oben gesehen,
- Fig. 3: eine teilweise Ansicht eines rückwärtigen Bereichs der Lenkeinrichtung,
- Fig. 4: eine ausschnittsweise Ansicht eines mittleren Teils der Lenkeinrichtung an dem eine Lenkspindel angreift und
- Fig. 5: eine Ansicht des in Fig. 4 dargestellten Bereichs von oben gesehen.

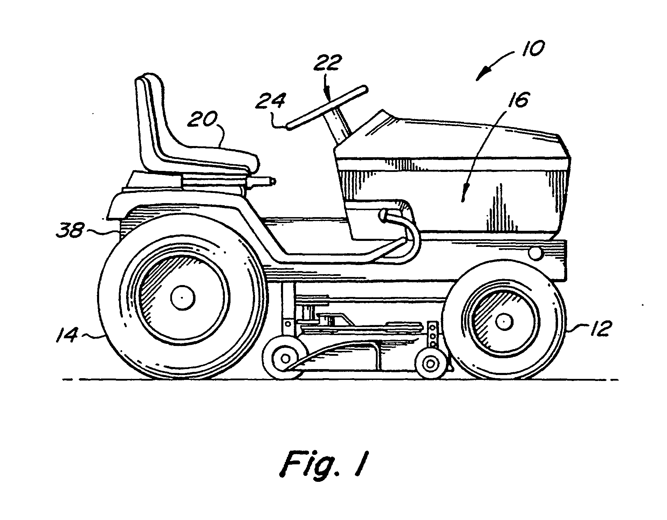

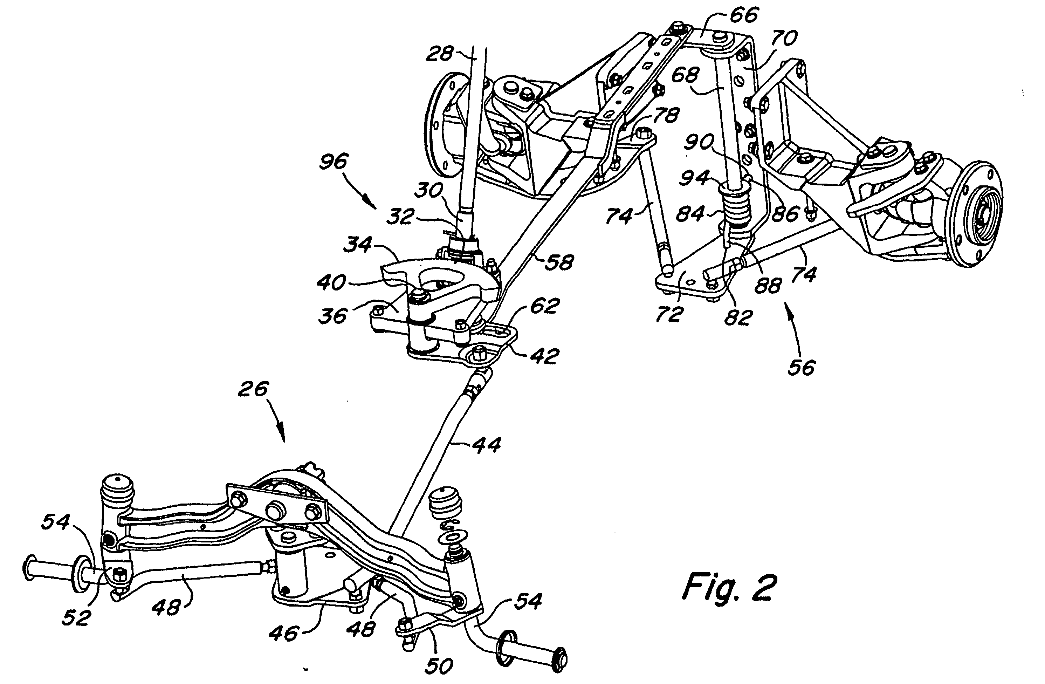

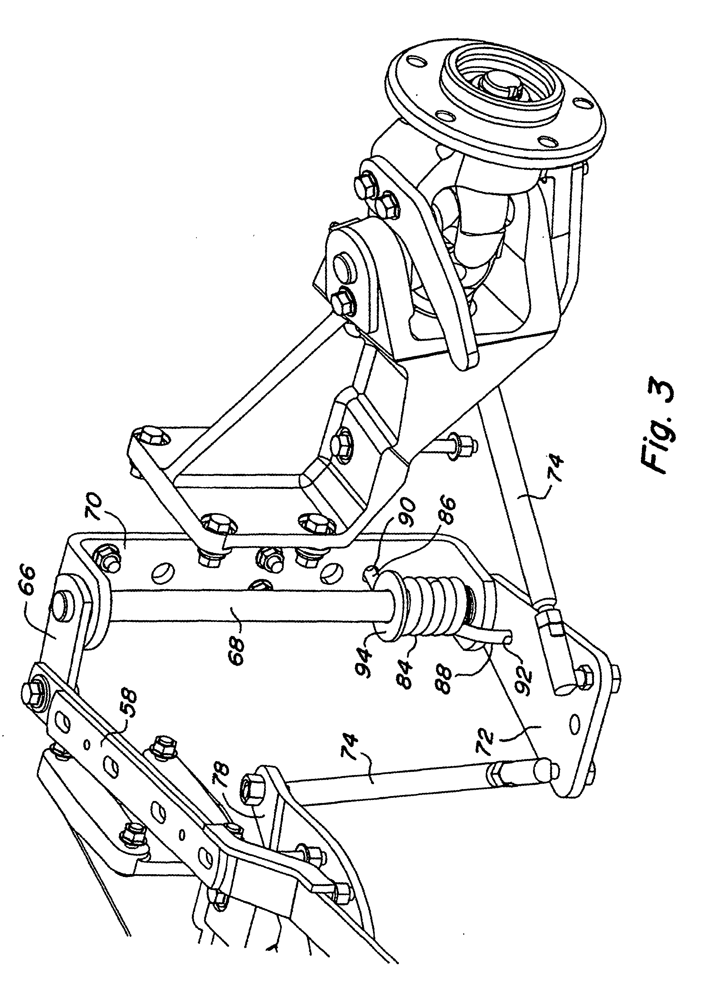

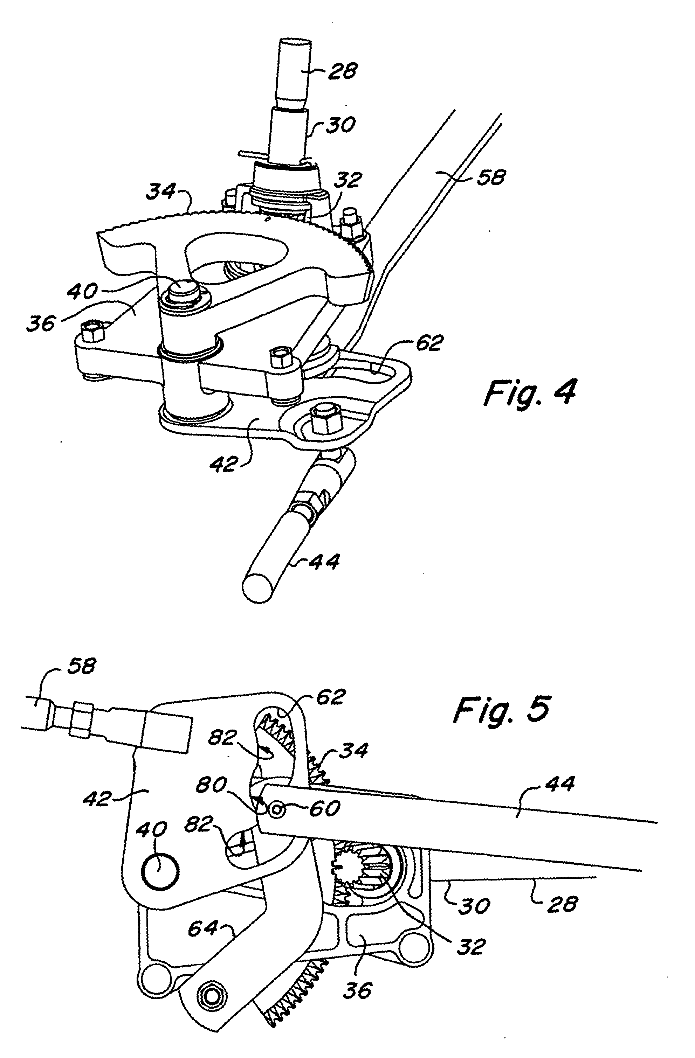

Es wird nun auf die Figuren 1 - 5 Bezug genommen, in denen eine bevorzugte Ausführungsform der vorliegenden Erfindung gezeigt wird. Ein Rasentraktor bzw. ein Fahrzeug 10 weist ein Paar vorderer und rückwärtiger, den Boden berührender Räder 12 und 14 auf. Die rückwärtigen Räder 14 werden durch einen Antrieb 16 angetrieben, der in einem vorderen Bereich des Fahrzeugs 10 angeordnet ist. Ein Bedienerstand 18 weist einen Sitz 20 auf, auf dem eine Bedienungsperson während eines Betriebs des Fahrzeugs 10 sitzt. Mehrere Fahrzeugbedienungseinrichtungen 22 sind in dem Bedienerstand 18 angeordnet und sind für eine Bedienungsperson zur Steuerung des Fahrzeugs 10 greifbar. Ein Lenkrad 24 ist in dem Bedienerstand 18 in üblicher Weise vorgesehen, so daß eine sitzende Bedienungsperson das Fahrzeug 10 durch ein Drehen des Lenkrades 24 lenken kann.

Als nächstes soll ein vorderes Lenkgestänge 26 genauer beschrieben werden. Eine Lenkspindel 28 ist mit dem Lenkrad 24 verbunden und erstreckt sich von diesem nach unten. An dem unteren Ende 30 der Lenkspindel 28 kämmt ein Ritzel 32 mit einem Sektorzahnrad 34. Das Ritzel 32 und das Sektorzahnrad 34 werden beide schwenkbar von einer Aufnahmeplatte 36 getragen, die mit dem Fahrzeugrahmen 38 verschraubt oder anderweitig verbunden ist. Ein Stift 40 ist mit dem Sektorzahnrad 34 verbunden und bestimmt die Achse, um die das Sektorzahnrad 34 schwenkt. Der Stift 40 erstreckt sich durch die Aufnahmeplatte 36 nach unten. Eine geschlitzte Platte 42 ist mit dem unteren Ende des Stifts 40 verbunden, um mit diesem zu verschwenken. Ein vorderes Hebelelement 44 ist schwenkbar mit der geschlitzten Platte 42 verbunden und erstreckt sich nach vorne zu dem vorderen Bereich des Fahrzeugs 10. Das vordere Hebelelement 44 ist schwenkbar mit einer vorderen Schwenkplatte 46 verbunden. Ein Paar vorderer Spurstangen 48 ist schwenkbar an der vorderen Schwenkplatte 46 angebracht und erstreckt sich seitwärts nach außen, um sich mit linken und rechten vorderen Armen 50 und 52 zu verbinden. Die Arme 50 und 52 sind wirksam mit den vorderen Radspindeln oder Achsen 54 verbunden, um die vorderen Räder 12 während der Ausführung einer Fahrzeugdrehung zu verschwenken.

Wenn die Bedienungsperson das Lenkrad 24 dreht, drehen sich die Lenkspindel 28 und das Ritzel 32 mit dem Lenkrad 24. Als Antwort auf die Drehung des Ritzels 32, verschwenkt das Sektorzahnrad 34, das mit dem Ritzel 32 kämmt, um die Achse, die durch den Stift 40 bestimmt wird. Der Stift 40 und die geschlitzte Platte 42 verschwenken mit dem Sektorzahnrad 34, was bewirkt, daß sich das vordere Hebelelement 44 sich in Längsrichtung mit der geschlitzten Platte 42 verschiebt. Die vordere Schwenkplatte 46 schwenkt zur Linken oder zur Rechten als Antwort darauf, daß sich das vordere Hebelelement 44 in Längsrichtung verschiebt, wodurch wiederum bewirkt wird, daß die Spurstangen 48 sich im Einklang verschieben, um die vorderen Räder 12 in die gleiche Richtung zu drehen, um eine Fahrzeugdrehung auszuführen.

Als nächstes wird das rückwärtige Lenkgestänge 56 detaillierter beschrieben werden. Ein rückwärtiges Hebelelement 58 ist mit der geschlitzten Platte 42 mittels eines Stifts 60 verbunden, der in einem Schlitz 62 der geschlitzten Platte 42 aufgenommen wird. Der Stift 60 verschiebt sich in dem Schlitz 62, wenn die geschlitzte Platte 42 in Antwort auf ein Drehen des Lenkrads 24 verschwenkt, wie es im folgenden genauer beschrieben werden wird. Ein Führungsarm 64 weist ein Ende auf, daß schwenkbar mit der Aufnahmeplatte 36 verbunden ist und andernends schwenkbar mit dem Stift 60 verbunden ist. Das rückwärtige Hebelelement 58 erstreckt sich von dem Stift 60 nach rückwärts und ist schwenkbar mit einem Hebel 66 verbunden, der an der Oberseite einer Schwenkwelle 68 angebracht ist. Die Schwenkwelle 68 wird schwenkbar durch einen Halter 70 gehalten, der mittels Schrauben an dem Fahrzeugrahmen 38 angebracht ist. Das untere Ende der Schwenkwelle 68 ist mit einer rückwärtigen Schwenkplatte 72 verbunden. Ein Paar rückwärtiger Spurstangen 74 ist mit der rückwärtigen Schwenkplatte 72 verbunden und jedes ist mit einem entsprechenden rückwärtigen Armelement 76 und 78 verbunden. Die rückwärtigen Armelemente 76 und 78 sind schwenkbar, um jedes rückwärtige Rad 14 zur Ausführung einer Drehung schwenken zu können. Ein Kardangelenk überträgt Kraft zu jedem der schwenkbaren, rückwärtigen Räder 14, und ist daran angepaßt, Drehbewegung an die rückwärtigen Räder 14 im Einklang mit dem Verschwenken der rückwärtigen Räder 14 während des Ausführens einer Drehung zu übertragen.

Wenn die Bedienungsperson das Lenkrad 24 dreht, schwenken die Lenkspindel 28 und das Ritzel 32 mit. Das Sektorzahnrad 34, der Stift 40 und die geschlitzte Platte 42 schwenken gemeinsam als Antwort auf die Drehung des Ritzels 32. Wenn das Lenkrad 24 in einem Anfangsbewegungsbereich aus der Geradeausstellung gedreht wird, verschiebt sich der Stift 60 in einem zentralen Bereich 80 des Schlitzes 62. Der zentrale Bereich 80 des Schlitzes 62 ist so ausgerichtet und geformt, daß er, wenn der Stift 60 sich in dem zentralen Bereich 80 befindet, die geschlitzte Platte 42 den Stift 60 nicht in Längsrichtung verschieben wird, wenn die geschlitzte Platte 42 schwenkt. Wenn die geschlitzte Platte 42 sich über den Anfangsbereich hinaus und in einen zweiten Bereich hinein verschiebt, wird sich der Stift 60 in zweite Bereiche 82 des Schlitzes 62 verschieben. Die zweiten Bereiche 82 des Schlitzes 62 sind derart ausgerichtet und geformt, daß eine Schwenkbewegung der geschlitzten Platte 42 verursacht, daß der Stift 60 sich in Längsrichtung verschiebt, wenn sich der Stift 60 in den zweiten Bereichen 82 des Schlitzes 62 befindet. Dies bewirkt, daß sich das rückwärtige Hebelelement 58 in Längsrichtung verschiebt und dabei die rückwärtigen Räder 14 über das rückwärtige Steuergestänge 56 dreht. Die Gestalt des Schlitzes 62 dient dazu, das Drehen der rückwärtigen Räder 14 zu verzögern, wenn das Lenkrad 24 aus der Geradeausstellung gedreht wird. Mit anderen Worten, wenn das Lenkrad 24 anfänglich innerhalb eines Anfangsbewegungsbereichs aus der Geradeausstellung gedreht wird, verschwenken nur die vorderen Räder 12. Wenn das Lenkrad 24 weiter in einen zweiten Bewegungsbereich gedreht wird, wird sich der Stift 60 in zweite Bereiche 82 des Schlitzes 62 verschieben, wodurch die rückwärtigen Räder 14 verschwenkt werden. Wenn das Lenkrad 24 nur leicht aus der Geradeausstellung gedreht wird, werden nur die vorderen Räder 12 verschwenkt, um das Fahrzeug 10 zu lenken; wenn aber das Lenkrad 24 weiter aus der Geradeausstellung gedreht wird, werden beide, die vorderen und die rückwärtigen, Räder 12 und 14 verschwenkt, um eine verhältnismäßig enge Drehung mit einem verhältnismäßig kleinen Radius auszuführen.

Die vorliegende Erfindung stellt weiter eine Drehfeder bzw. Feder 84 mit ersten und zweiten Endbereichen 86 und 88 zur Verfügung, die in Öffnungen 90 und 92 eingreifen, die in dem Halter 70 und der rückwärtigen Schwenkplatte 72 vorgesehen sind. Die Drehfeder bzw. Feder 84 ist um die Schwenkwelle 68 gewunden. Eine Scheibe 94 ist an die Schwenkwelle 68 angeschweißt, um die Feder 84 in der passenden Stellung zu halten und die Feder 84 daran zu hindern, sich auf der Schwenkwelle 68 nach oben zu verschieben. Die Feder 84 legt keine Kraft an die rückwärtige Schwenkplatte 72 an, wenn das rückwärtige Lenkgestänge 56 und die rückwärtige Schwenkplatte 72 in der Geradeausstellung angeordnet sind. Wenn das Lenkrad 24 gedreht wird und die rückwärtige Schwenkplatte 72 nach einer Seite schwingt, biegt sich die Feder 84 und legt eine Kraft an die rückwärtige Schwenkplatte 72 an. Die Feder 84 wird gegen den Halter 70 drücken und eine Kraft an die rückwärtige Schwenkplatte 72 in Richtung zurück auf die zentralen Stellung, die mit der Geradeausstellung der Fahrzeugfahrtrichtung korrespondiert, ausüben.

Wie zuvor beschrieben, neigen die rückwärtigen Räder 14 eines allradgelenkten Rasentraktors bzw. Fahrzeugs 10 nicht dazu, in eine Geradeausstellung zurückgedrängt zu werden, wenn eine Drehung beendet ist. Vielmehr neigt die Berührung der rückwärtigen Räder 14 mit dem Untergrund während des Ausführens einer Drehung dazu, eine Kraft aufzubauen, welche die rückwärtigen Räder 14 daran hindert, in eine Geradeausstellung zurückzukehren. Wenn eine Bedienungsperson das Lenkrad 24 eines allradgelenkten Fahrzeugs 10 zurück in die Geradeausstellung dreht, können die eingeschlagenen rückwärtigen Räder 14 Kräfte auf das Lenkrad 24 übertragen, die es für die Bedienungsperson schwierig macht, das Lenkrad 24 in seine Geradeausstellung zu bringen. Die Feder 84 entsprechend der vorliegenden Erfindung legt eine Kraft an das rückwärtige Lenkgestänge 56 an, um diese Kräfte zu überwinden, die durch den abrollenden Kontakt mit dem Boden aufgebracht werden. Die Feder 84 wirkt, um das rückwärtige Lenkgestänge 56 in Richtung seiner Geradeausstellung zu belasten. Die Feder 84 unterstützt die Bedienungsperson dabei, das Lenkrad 24 und das Lenkgestänge 96 in ihre Geradeausstellung zurückzubringen. Die Feder 84 erlaubt es dem Lenkgestänge 96 dabei, sich mehr wie ein vorderradgesteuertes Lenkgestänge zu verhalten oder bedienen zu lassen, als dies übliche allradgesteuerte Fahrzeuge tun.

Die Feder 84 greift an der rückwärtigen Schwenkplatte 72 an und ist daher verhältnismäßig nahe an den Kräften angeordnet, die an die rückwärtigen Räder 14 durch die Bodenoberfläche angelegt werden, welche dazu neigen, die rückwärtigen Räder 14 eingeschlagen zu halten. Die Feder 84 greift daher an dem Lenkgestänge verhältnismäßig nahe an der Kraft an, die die Feder 84 zu überwinden versucht. Bereiche des Lenkgestänges 96 zwischen der Feder 84 und dem Lenkrad 24 stoßen auf geringere Belastungen während des Betriebs, aufgrund der Nähe der Feder 84 zu den rückwärtigen Rädern 14. Die Feder 84 wirkt den Kräften entgegen, die durch den Untergrund auf die rückwärtigen Räder 14 ausgeübt werden, welche die rückwärtigen Räder 14 daran hindern, in ihre Geradeausstellung zurückzuschwenken. Diese Kräfte von der Untergrundoberfläche werden durch die Räder 14 und durch das Lenkgestänge übertragen, bis die Kraft auf die Feder 84 trifft oder durch diese verteilt wird. Belastungen in dem Lenkgestänge 56 zwischen der Feder 84 und den rückwärtigen Rädern 14 sind während des Ausführens einer Drehung verhältnismäßig hoch, aber die Belastungen in anderen Bereichen des Lenkgestänges 56 des Fahrzeugs 10 sind verhältnismäßig gering. Wenn die Feder 84 an dem rückwärtigen Hebelelement 58 anstatt an der rückwärtigen Schwenkplatte 72, wie dargestellt, angreift, würde die schwenkbare Verbindung zwischen dem rückwärtigen Hebelelement 58 und dem Hebelelement 66 während des Ausführens einer leichten Drehung auf verhältnismäßig große Kräfte treffen. Die Anordnung des Angriffs der Feder 84 an einem Bereich des Lenkgestänges 96 in der Nähe der rückwärtigen Räder 14 hilft dabei, die Kräfte und Belastungen zu verringern, denen ein Großteil des Lenkgestänges 96 ausgesetzt ist.

Die Feder 84 greift direkt an dem rückwärtigen Lenkgestänge 56 und genauer an der rückwärtigen Schwenkplatte 72 an. Da die Feder 84 an dem rückwärtigen Lenkgestänge 56 angreift, beeinflußt die Feder 84 nicht die Handhabung des vorderen Lenkgestänges 26, wenn das Lenkrad 24 nur leicht aus seiner Geradeausstellung gedreht wird. Wenn nur die vorderen Räder 12 verschwenkt werden, beispielsweise wenn eine leichte Drehung ausgeführt wird, ist die Feder 84 wirksam von dem vorderen Lenkgestänge 26 durch die Wirkung des Schlitzes 62 in der geschlitzten Platte 42 getrennt. Daher wird die Handhabung des Fahrzeugs 10 nicht durch die Feder 84 beeinflußt, wenn nur die vorderen Räder 12, während des Ausführens einer leichten Drehung, verschwenkt werden. Daher wird sich der Traktor bzw. das Fahrzeug 10 während des Ausführens einer leichten Drehung verhalten oder zu handhaben sein, wie es von einem vorderradgesteuerten Fahrzeug erwartet wird. Die Feder 84 beeinflußt die Lenkung oder die Handhabung des Fahrzeugs 10 nur, wenn die rückwärtigen Räder 14 zu schwenken beginnen, wenn der Stift 60 sich in dem zweiten Bereich 82 des Schlitzes 62 befindet, beispielsweise wenn eine verhältnismäßig enge Fahrzeugdrehung ausgeführt wird.

## Patentansprüche

1. Lenkeinrichtung mit einem Lenkgestänge (96), das wirksam mit zumindest einem vorderen Rad (12) und einem rückwärtigen Rad (14) in Verbindung steht, um diese in Abhängigkeit voneinander einschlagen zu können, wobei dem rückwärtigen Rad (14) Mittel zugeordnet sind, die es direkt oder indirekt in Richtung seiner Neutralstellung belasten, **dadurch gekennzeichnet, daß** das rückwärtige Rad (14) in seiner Neutralstellung nicht durch die Mittel belastet wird.

2. Lenkeinrichtung nach Anspruch 1, **dadurch gekennzeichnet, daß** die Mittel zumindest eine Feder (84) aufweisen.

3. Lenkeinrichtung nach einem oder mehreren der vorherigen Ansprüche, **dadurch gekennzeichnet, daß** das Lenkgestänge (96) ein vorderes Lenkgestänge (26) und ein rückwärtiges Lenkgestänge (56) aufweist, die derart verbindbar sind, daß das vordere Rad (12) und das rückwärtige Rad (14) entgegengesetzt einschlagen.

4. Lenkeinrichtung nach einem oder mehreren der vorherigen Ansprüche, **dadurch gekennzeichnet, daß** die Lenkbewegung an das rückwärtige Rad (14) über zumindest eine Schwenkwelle (68) weitergegeben wird, die unabhängig von dem Lenkgestänge (96) gelagert ist und die einenends mit dem Lenkgestänge (96) und anderenends mit den Rädern (12, 14) in Verbindung steht.

5. Lenkeinrichtung nach einem oder mehreren der vorherigen Ansprüche, **dadurch gekennzeichnet, daß** zumindest ein Rad (12, 14) mit dem Lenkgestänge (96) bzw. der Schwenkwelle (68) über einen auf zumindest eine Spurstange (48, 74) einwirkenden Lenkhebel (46, 72) verschwenkbar ist und die Mittel an einem rückwärtigen Lenkhebel (72) angreifen.

6. Lenkeinrichtung nach einem oder mehreren der vorherigen Ansprüche, **dadurch gekennzeichnet, daß** die durch die Mittel hervorgerufene Reaktionskraft nicht durch die Lenkeinrichtung aufgenommen wird und die Mittel einenends an einem nicht der Lenkeinrichtung zugeordneten Bauteil angreifen.

7. Lenkeinrichtung nach einem oder mehreren der vorherigen Ansprüche, **dadurch gekennzeichnet, daß** Mittel vorgesehen sind, die ein Verschwenken des rückwärtigen Rades (14) nur bei Überschreiten eines vorgegebenen Lenkwinkels bewirken.

8. Fahrzeug (10) mit einer Lenkeinrichtung nach einem oder mehreren der vorherigen Ansprüche.

9. Fahrzeug nach Anspruch 8, **dadurch gekennzeichnet, dass** es sich um ein Fahrzeug zur Rasen-, Garten- bzw. Grundstückspflege handelt.

## Claims

1. A steering arrangement with a steering linkage (96) which is operative connected to at least a front wheel (12) and a rear wheel (14), in order to be able to act on these in dependence on one another, wherein means are associated with the rear wheel (14) which bias it directly or indirectly in the direction of its neutral position, **characterized in that** the rear wheel (14) is not subjected to a bias by the means in its neutral position.

2. A steering arrangement according to claim 1, **characterized in that** the means comprise at least one spring (84).

3. A steering arrangement according to one or more of the preceding claims, **characterized in that** the steering linkage (96) comprises a front steering linkage (26) and a rear steering linkage (56), which can be so coupled that the front wheel (12) and the rear wheel (14) are oppositely affected.

4. A steering arrangement according to one or more of the preceding claims, **characterized in that** the steering movement at the rear wheel (14) is transferred through at least one pivot shaft (68), which is mounted independently of the steering linkage (96) and which is connected at one end to the steering linkage (96) and at the other end to the wheels (12, 14).

5. A steering arrangement according to one or more of the preceding claims, **characterized in that** at least one wheel (12, 14) can be turned by the steering linkage (96) or the pivot shaft (68) through a steering lever (46, 72) acting on at least one track rod (48, 74) and the means engage on a rear steering lever (72).

6. A steering arrangement according to one or more of the preceding claims, **characterized in that** the reaction force created by the means is not absorbed by the steering arrangement and the means engage at one end on a component which is not associated with the steering arrangement.

7. A steering arrangement according to one or more of the preceding claims, **characterized in that** means are provided which effect turning of the rear wheel (14) only on exceeding a predetermined steering angle.

8. A vehicle (10) with a steering arrangement according to one or more of the preceding claims.

9. A vehicle according to claim 8, **characterized in that** a vehicle for lawn, garden or plot care is involved.

## Revendications

1. Système de direction du type comportant un embiellage de direction (96) qui est en relation fonctionnelle avec au moins une roue avant (12) et une roue arrière (14) en vue de pouvoir braquer celles-ci en dépendance l'une de l'autre, à la roue arrière (14) étant associés des moyens qui la contraignent directement ou indirectement vers sa position neutre, **caractérisé en ce que** la roue arrière (14) dans sa position neutre n'est pas contrainte par lesdits moyens.

2. Système de direction selon la revendication 1, **caractérisé en ce que** lesdits moyens comportent au moins un ressort (84).

3. Système de direction selon une ou plusieurs des revendications, **caractérisé en ce que** l'embiellage de direction (96) comporte un embiellage de direction avant (26) et un embiellage de direction arrière (56) qui peuvent être reliés d'une manière telle que la roue avant (12) et la roue arrière (14) sont braquées de façon opposée.

4. Système de direction selon une ou plusieurs des revendications précédentes, **caractérisé en ce que** le déplacement directionnel est transmis à la roue arrière (14) par au moins un arbre basculant (68) monté indépendamment de l'embiellage de direction (96) et qui est en liaison par une extrémité avec l'embiellage de direction (96) et par l'autre extrémité avec les roues (12, 14).

5. Système de direction selon une ou plusieurs des revendications précédentes, **caractérisé en ce qu'**au moins une des roues (12, 14) peut basculer avec l'embiellage de direction (96) ou l'arbre basculant (68) autour d'une biellette de direction (46, 72) agissant sur au moins une barre d'écartement (48, 74) et lesdits moyens sont accrochés à une biellette de direction arrière (72).

6. Système de direction selon une ou plusieurs des revendications précédentes, **caractérisé en ce que** la force de réaction provenant desdits moyens n'est pas reprise par le système de direction, et lesdits moyens étant accrochés par une extrémité à un élément structural n'appartenant pas au système de direction.

7. Système de direction selon une ou plusieurs des revendications précédentes, **caractérisé en ce que** des moyens sont prévus, qui ne produisent un basculement de la roue arrière (14) que lors du dépassement d'un angle de direction prédéterminé.

8. Véhicule (10) comportant un système de direction selon une ou plusieurs des revendications précédentes.

9. Véhicule selon la revendication 8, **caractérisé en ce qu'**il s'agit d'un véhicule destiné à l'entretien des pelouses, des jardins ou de terrains.
